(19) Europäisches Patentamt
European Patent Office
Office européen des brevets

(11) Veröffentlichungsnummer: **0 014 677**
**B1**

(12) # EUROPÄISCHE PATENTSCHRIFT

(45) Veröffentlichungstag der Patentschrift: **27.10.82**

(51) Int. Cl.³: **C 09 B 44/08,** D 06 P 1/41, D 21 H 3/80

(21) Anmeldenummer: **80810023.4**

(22) Anmeldetag: **28.01.80**

(54) **Basische Monoazofarbstoffe der Bis-benzthiazol-azobenzolreihe, Verfahren zu deren Herstellung sowie deren Verwendung zum Färben und Bedrucken von Textilmaterial, Papier, Leder und zur Bereitung von Tinten.**

(30) Priorität: **02.02.79 CH 1040/79**
**07.01.80 CH 62/80**

(43) Veröffentlichungstag der Anmeldung: **20.08.80 Patentblatt 80/17**

(45) Bekanntmachung des Hinweises auf die Patenterteilung: **27.10.82 Patentblatt 82/43**

(84) Benannte Vertragsstaaten: **CH DE FR GB IT**

(56) Entgegenhaltungen:
**FR-A-925 614**
**FR-A-1 396 903**
**FR-A-1 495 232**
**FR-A-2 216 286**

(73) Patentinhaber: **CIBA-GEIGY AG, Patentabteilung Postfach, CH-4002 Basel (CH)**

(72) Erfinder: **Adam, Jean-Marie, Dr., 3, Rue de Montreux, F-68300 Saint-Louis (FR)**
Erfinder: **Ramanathan, Visvanathan, Dr., Friedensgasse 24, CH-4056 Basel (CH)**
Erfinder: **Galafassi, Pierre, Dr., 12 Rue des Sapins, F-68170 Rixheim (FR)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 014 677 B1

Basische Monoazofarbstoffe der Bis-benzthiazol-azobenzolreihe, Verfahren zu deren Herstellung sowie deren Verwendung zum Färben und Bedrucken von Textilmaterial, Papier Leder und zur Bereitung von Tinten

Die Erfindung betrifft neue basische Azoverbindungen, Verfahren zu deren Herstellung und deren Verwendung als Farbstoffe zum Färben und Bedrucken von Textilmaterialien, Papier und Leder sowie zur Bereitung von Tinten.

Die neuen basischen Azoverbindungen entsprechen der Formel I

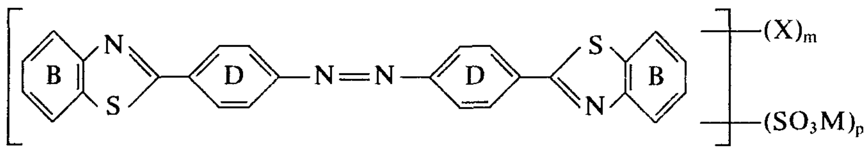

(I)

worin bedeuten:

X ein- oder mehrmals die Reste ($CH_2 \cdot NR \cdot CO(CH_2)_nA$) und/oder ($SO_2NH(CH_2)_nA$)
R Wasserstoff oder eine Alkylgruppe mit 1 bis 4 C-Atomen,
A einen gegebenenfalls quaternisierten basischen Rest,
n die Zahlen 1 bis inclusive 4, insbesondere 1,
m die Zahlen von 1 bis inclusive 4, insbesondere 2,
M Wasserstoff oder ein Kation, p die Zahlen 0 bis inclusive 2, vor allem 0, mit der Bedingung, daß m gleich groß oder größer ist als p und worin die Benzolreste B und D ein- oder mehrmals, gleich oder verschieden weiter substituiert sein können.

R in der Bedeutung einer Alkylgruppe mit 1 bis 4 Kohlenstoffatomen stellt z. B. eine unverzweigte oder verzweigte Alkylgruppe dar; beispielsweise sind genannt: die Methyl-, Äthyl-, n- und iso-Propyl- und die n-, sec- und tert. Butylgruppe. In bevorzugten Azoverbindungen bedeutet R Wasserstoff.

A in der Bedeutung einer gegebenenfalls quaternisierten basischen Gruppe stellt z. B. dar:

a) als eine basische Gruppe z. B. den Rest

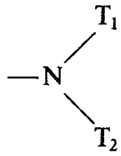

worin bedeuten:
$T_1$ Wasserstoff oder einen niedrigmolekularen, gegebenenfalls durch Hydroxyl substituierten Alkylrest oder einen gegebenenfalls durch 1 bis 3 Methylreste substituierten Cyclohexylrest oder einen Phenylrest, und
$T_2$ einen niedrigmolekularen, gegebenenfalls durch Hydroxyl substituierten Alkylrest, oder die Symbole $T_1$ und $T_2$ bilden zusammen mit dem an sie gebundenen N-Atom gegebenenfalls unter Einschluß eines weiteren Heteroatoms einen hydrierten heterocyclischen Ring; z. B. den Morpholinring.

b) als eine quaternisierte Gruppe z. B. den Rest der Formel:

a) 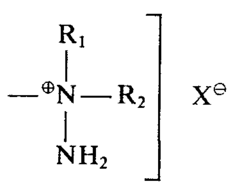

worin $R_1$ und $R_2$ unabhängig voneinander bedeuten: Wasserstoff, einen gegebenenfalls, durch z. B. Hydroxyl substituierten Alkylrest mit 1 bis 4 Kohlenstoffatomen, wie den Methyl-, Äthyl-, n- und iso-Propyl- und n-, sec- und tert. Butylrest, eine gegebenenfalls substituierte Cycloalkylgruppe, vor allem die Cyclohexylgruppe, welche gegebenenfalls durch ein oder mehrere Alkylgruppen, vor allem die $CH_3$-Gruppe, substituiert ist oder einen Arylrest, vor allem den Phenylrest; oder $R_1$ bildet mit $R_2$ unter Einschluß des N-Atoms einen heterocyclischen Ring; wie den Pyrrolidin-, Piperidin-, Morpholin- oder Piperazinring;

b) 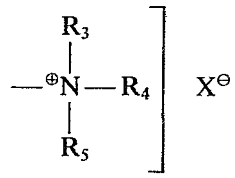

worin bedeuten: $R_3$ und $R_4$ unabhängig voneinander Wasserstoff, einen gegebenenfalls substituierten Alkylrest mit 1 bis 4 Kohlenstoffatomen, wie den Methyl-, Äthyl-, n- und iso-Propyl- und n-, sec- und tert. Butylrest, oder den Hydroxyäthyl- oder Aminoäthylrest; eine gegebenenfalls substituierte Cycloalkylgruppe, vor allem die Cyclohexylgruppe oder einen Arylrest wie den Phenylrest und $R_5$ eine Alkylgruppe mit 1 bis 4 Kohlenstoffatomen oder $R_3$ bildet mit $R_4$ zusammen unter Einschluß des N-Atoms einen heterocyclischen Ring; vor allem den Pyrrolidin-, Piperidin-, Morpholin- oder Piperazinring; oder $R_3$ bildet mit $R_4$ und $R_5$ zusammen unter Einschluß des N-Atoms und gegebenenfalls einem weiteren Heteroatom wie N, O oder S einen heterocyclischen Ring wie z. B. den gegebenenfalls durch OH, $HN_2$, COOH, CN oder Niederalkyl substituierten Pyridinring oder den Ring der Formel

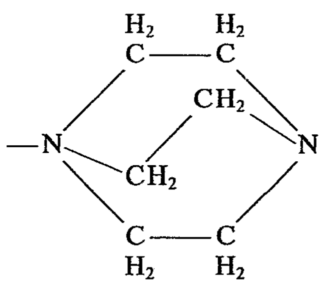

c) 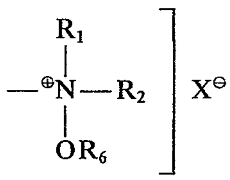

worin $R_1$ und $R_2$ die weiter oben unter a) angegebene Bedeutung haben und $R_6$ einen Alkylrest mit 1 bis 4 C-Atomen darstellt, und worin in allen quaternisierten, basischen Resten $X^{\ominus}$ ein Anion bedeutet.

In bevorzugten Azoverbindungen bedeutet A einen Pyridinring, und $X^{\ominus}$ ein Anion.

Als Anionen kommen für den Fall, daß A eine quaternisierte basische Gruppe darstellt, sowohl anorganische wie organische Anionen in Frage; beispielsweise sind genannt: Halogen, wie Chlorid-, Bromid- oder Jodid-, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Bevorzugte Anionen sind das Chlorid-, Acetat-, Zinkchlorid- oder Methylsulfation.

M in der Bedeutung eines Kations stellt z. B. das Li-, Na-, K- oder $NH_4$-Ion dar; vorzugsweise handelt es sich um das Na-Ion.

Sind die Benzolreste B noch weitersubstituiert, so können diese ein- oder mehrmals, gleich oder verschieden substituiert sein durch z. B.: eine Alkylgruppe mit 1 bis 4 C-Atomen, Halogen, wie Fluor, Chlor oder Brom, eine gegebenenfalls z. B. durch Halogen oder Alkyl substituierte Phenylgruppe, eine Alkoxygruppe, $NO_2$, OH, eine am N-Atom mono- oder disubstituierte (z. B. durch Alkyl) $SO_2NH_2$-Gruppe eine

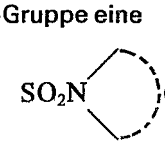 Gruppe

wo das N-Atom gegebenenfalls unter Einbezug eines weiteren Heteroatoms, wie z. B. O, Bestandteil eines heterocyclischen Ringes ist, oder durch eine heterocyclische Gruppe, vor allem die

Benzthiazolgruppe.

In bevorzugten Azoverbindungen sind die Benzolreste B mit einer Alkylgruppe mit 1 bis 2 C-Atomen, insbesondere durch die $CH_3$-Gruppe insbesondere in p-Stellung zum N-Atom weitersubstituiert.

Sind die Benzolreste D noch weitersubstituiert, so können auch diese ein- oder mehrmals, gleich oder verschieden substituiert sein durch z. B.: Halogen, wie Fluor, Chlor oder Brom; durch Alkyl- oder Alkoxygruppen mit je 1 bis 4 C-Atomen, wie z. B. die Methyl-, Äthyl-, n- und iso-Propyl, n-, sec.- und tert. Butylgruppe oder die Methoxy-, Äthoxy-, Propoxy- oder Butoxygruppe. In bevorzugten Azoverbindungen sind die Benzolreste D nicht weiter substituiert.

Besonders interessante Azoverbindungen entsprechen dabei der Formel I, worin

R Wasserstoff,
A einen quaternisierten basischen Rest, vor allem einen solchen der Formel

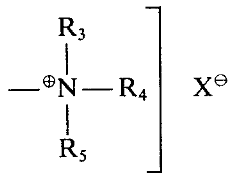

darstellt, worin $R_3$, $R_4$ und $R_5$ unter Einschluß des N-Atoms zu einem Pyridinring verknüpft sind, und worin $X^{\ominus}$ ein Anion darstellt,
n die Zahl 1 und m die Zahl 2,
p die Zahl 0 bedeuten, und worin der Benzolrest B durch eine Alkylgruppe mit 1 bis 2 C-Atomen, vor allem die $CH_3$-Gruppe und der Benzolrest D nicht weiter substituiert ist.

Die FR-PS 2 216 286, 1 396 903 und 925 614 beschreiben kationische Farbstoffe unter anderem mit einem Benzthiazolrest, die sich aber konstitutionell von den erfindungsgemäßen Farbstoffen unterscheiden.

Nächstliegend zu den erfindungsgemäßen Farbstoffen sind diejenigen der FR-PS 1 495 232, welche ebenfalls Bis-benzthiazol-azo-farbstoffe darstellen, aber einen quaternären Hydrazinrest enthalten. Überraschenderweise weisen die erfindungsgemäßen Farbstoffe im Vergleich zu diesen nächstvergleichbaren Farbstoffen in der Applikation auf Papier bessere Echtheiten, vor allem eine bessere Wasserechtheit, wie in Beispiel 5 dargelegt ist, auf.

Die Herstellung der Azoverbindungen der Formel I erfolgt nach bekannter Art und Weise. Eine Möglichkeit besteht z. B. darin, daß man:

a) in eine Azoverbindung der Formel II

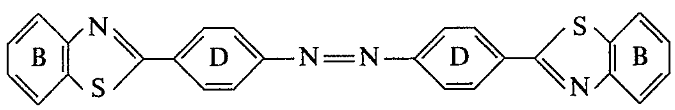

(II)

worin die Symbole B und D die unter Formel I angegebene Bedeutung haben die Gruppe

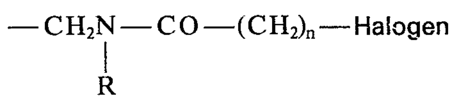

und/oder

$$-SO_2NH(CH_2)_n-\text{Halogen}$$

worin R und n die unter Formel I angegebene Bedeutung haben ein- bis viermal einführt, anschließend das Halogen-Atom durch eine basische Gruppe A oder durch eine quaternisierte basische Gruppe $A^{\oplus}]X^{\ominus}$ worin $X^{\ominus}$ ein Anion darstellt, ersetzt und gegebenenfalls die basische Gruppe A durch Quaternisierung in eine quaternisierte basische Gruppe überführt, und anschließend gegebenenfalls eine $SO_3M$-Gruppe einführt, oder

b) in eine Azoverbindung der Formel II die Gruppe

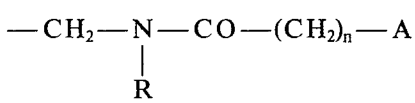

und/oder

$$—SO_2NH(CH_2)_n—A$$

worin A eine basische Gruppe darstellt und R und n die unter Formel I angegebene Bedeutung haben, ein- bis viermal einführt und anschließend gegebenenfalls die basische Gruppe A quaternisiert und sodann gegebenenfalls eine $SO_3$-M-Gruppe einführt.

Die Ausgangsverbindungen der Formel II sind bekannt (Helv. chem. acta 1944, S. 1 ff.) und können nach bekannten Methoden hergestellt werden.

Eine weitere Variante der Herstellung der Verbindungen der Formel I besteht schließlich noch darin, daß man in ein Amin der Formel

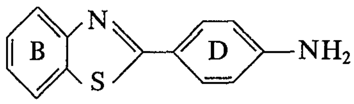

die Gruppe $-(CH_2NR \cdot CO \cdot (CH_2)_nA)$ und/oder $-SO_2NH(CH_2)_nA$ ein- bis zweimal einführt, anschließend gegebenenfalls sulfiert und diazotiert und analog der Verfahrensweise gemäß (Helv. chem. acta 1944, S. 1 ff.) verfährt.

Was diese Verfahrensvariante betrifft, so erfolgt die Einführung einer quaternisierbaren basischen Gruppe $-CH_2-N(R)-CO-(CH_2)_nA$ und/oder $-SO_2NH(CH_2)_nA$, worin die Symbole R, A und n die unter Formel I angegebene Bedeutung haben, nach bekannter Weise, z. B. derart, daß man die Verbindung der Formel II mit z. B. N-Methylolchloracetamid in konz. Schwefelsäure oder Phosphorsäure gegebenenfalls in Gegenwart von $P_2O_5$ bei 0° – 50° C, vorzugsweise bei Raumtemperatur, umsetzt und dann unter Aminierung das Chloratom vom N-Methylolchloracetamid durch eine basische oder vor allem durch eine kationische Gruppe A ersetzt oder indem man das Chloratom von N-Methylolchloracetamid durch eine basische Gruppe A ersetzt und diese dann durch Quaternierung in eine quaternierte Gruppe A überführt.

Die Quaternisierung erfolgt ebenfalls nach bekannter Art und Weise z. B. in einem inerten Lösungsmittel wie Chlorbenzol, oder gegebenenfalls in wässeriger Suspension oder ohne Lösungsmittel in einem Überschuß des Quaternisierungsmittels bei einer Temperatur von ca. 20° bis 120° C mit Quaternierungsmitteln.

Geeignete Quaternisierungsmittel sind z. B. Alkylhalogenide wie Methyl- oder Äthylchlorid, Methyl-, Äthyl- oder Butylbromid oder Methyl- oder Äthyljodid, dann vor allem Alkylsulfate, wie Dimethyl-, Diäthyl- oder Dibutylsulfat oder Benzylchlorid, Chloressigsäureamid, Acrylsäureester, Epoxyde wie Äthylenoxyd, Epichlorhydrin und Alkylester von aromatischen Sulfonsäuren, wie Methyl-p-toluolfulfonat, Methylbenzolsulfonat sowie die Propyl- und Butylester von Benzolsulfonsäure.

Ist gewünscht, daß die Azoverbindungen der Formel I eine $-SO_3M$-Gruppe enthalten, so können diese Gruppen vor oder nach der Quaternisierungsreaktion z. B. durch Sulfierung mit Schwefelsäure eingeführt werden.

Verwendung finden die neuen basischen, gegebenenfalls quaternisierten Azoverbindungen der Formel I als Farbstoffe zum Färben und Bedrucken von Textilmaterialien, Leder und Papier sowie zur Bereitung von Tinten.

Dienen diese Farbstoffe zum Färben und Bedrucken von Textilmaterialien so kommen als solche vor allem in Frage: natürliche und regenerierte Cellulosematerialien vor allem Baumwolle und Viscose, wobei man brillante gelbe Ausfärungen erhält; natürliches Polyamidmaterial wie Wolle und Seide und sauer modifizierte Polyamidmaterialien sowie Polyacrylnitrilmaterialien vor allem Naßkabel und basisch färbbares, modifiziertes Polyestermaterial. Die erfindungsgemäßen Azoverbindungen der Formel I haben auf diesen Textilmaterialien, vor allem auf Cellulosematerialien, ein gutes Ziehvermögen, einen guten Ausziehgrad und die erhaltenen Färbungen weisen sehr gute Echtheiten, vor allem Naßechtheiten wie Wasserechtheit, Wasser/Alkohol-Echtheit und insbesondere Lichtechtheiten auf.

Darüber hinaus ist von Vorteil, daß die erfindungsgemäßen Azoverbindungen der Formel I ohne Vorbehandlung der Cellulosematerialien und ohne zusätzliche Salzzugabe zur Färbeflotte auf diese Materialien aufziehen.

Die Azoverbindungen der Formel I sind gelbe Verbindungen; zur Applikation dieser Verbindungen ist es ferner nicht nötig, dem Applikationsbad Fixiermittel zuzusetzen.

Eine weitere Verwendung der erfindungsgemäßen Azoverbindungen der Formel I liegt in der Anwendung zum Färben von Papier, vor allem von gebleichtem, ungeleimtem und geleimtem ligninfreiem Papier. Vor allem die Lichtechtheit auf Papier ist unerwartet hoch, wie sie bei herkömmlichen Gelb-Marken für Papier nicht üblich ist; dadurch ist eine Einsatz-Möglichkeit im Dokumenten-Sektor gegeben. Ganz besonders geeignet sind diese Verbindungen zum Färben von

ungeleimtem Papier (Tissues) als Folge ihrer sehr hohen Standard-Affinität zu diesem Substrat.

Die erfindungsgemäßen Azoverbindungen ziehen sehr gut auf diese Substrate, wobei die Abwasser – auch bei tiefen Nuanchen – (bis über 1/1 RT = Richttypstärke) praktisch farblos bleiben, was ein eminenter ökologischer Vorteil, vor allem im Hinblick auf die heutigen Abwasser-Gesetze ist und auch dann, wenn im Abwasserkreislauf gearbeitet wird. Ferner ist die einfache Reproduzierbarkeit der Nuance vorteilhaft.

Die Färbungen sind naßecht, d. h. sie zeigen keine Neigung zum Ausbluten, wenn gefärbte Papiere in nassem Zustand mit feuchtem weißem Papier in Berührung gebracht wird. Diese Eigenschaft ist besonders für ungeleimte Papiere erwünscht, bei denen vorhersehbar ist, daß das gefärbte Papier in nassem Zustand (z. B. getränkt mit Wasser, Alkohol, Tensid-Lösung etc.) in Berührung mit anderen Flächen wie Textilien, Papier und dergleichen kommt, die gegen Verschmutzung geschützt werden müssen.

Die hohe Affinität für Papier und die große Ausziehgeschwindigkeit der erfindungsgemäßen Azofarbstoffe der Formel I ist für das Kontinue-Färben von Papier von großem Vorteil und ermöglicht somit einen viel breiteren Einsatz dieses wirtschaftlichen Verfahrens, das folgende Vorteile aufweist:

a) eine einfachere und schnellere Korrektur der Nuance und deshalb weniger Verlust an nicht-Typ-Konformem Papier (Ausschuß) im Vergleich zur diskontinuierlichen Papiermassenfärbung;
b) eine bessere Konstanz der Nuance und
c) wenn der Farbstoff kurz vor dem Stoffauflauf im »Dünnstoff« zudosiert wird, erübrigt sich eine gründliche Reinigung vom Holländer, Mischbutte etc. nach jeder Partie, wobei gleichzeitig der Arbeitsprozeß verkürzt und das Verfahren optimiert wird.

Weiter dienen die neuen Azoverbindungen in der Anwendung zum Färben von Ledermaterialien nach den verschiedensten Applikationsverfahren, wie Sprühen, Bürsten und Tauchen und zur Bereitung von Tinten, vor allem für Kugelschreiber.

Schließlich sind die neuen Azoverbindungen der Formel I noch zum Färben von linearen synthetischen Superpolyamiden wie Polyhexamethylenadipamid in der Masse geeignet. Das Anfärben der Polyamidschnitzel oder -chips erfolgt dabei vor allem aus einem wäßrigen Bad in Gegenwart von Netz- oder Dispergiermittel und gegebenenfalls Salzen und anschließendem Schmelzen und Verformen.

Im Hinblick auf die reduzierbaren Eigenschaften der geschmolzenen Superpolyamidschmelzen und der hohen Schmelztemperatur (ca. 270–300° C) stellt die Verwendung dieser Farbstoffe der Formel I eine überraschende Bereicherung der Technik dar.

Die folgenden Beispiele veranschaulichen die Erfindung ohne sie darauf zu limitieren. Die Temperaturen sind in Grad Celsius angegeben. Teile (T) bedeuten Gewichtsteile und %-Angaben sind Gewichtsprozente.

## Beispiel 1

48 T 4,4'-Bis(6-methyl-2-benzthiazol)azobenzol (erhalten gemäß Helv. Chim. Acta 1944, 27, 1) und 28 T N-Methylolchloracetamid werden bei 0–5° in 500 T 98%ige Schwefelsäure eingetragen. Das Reaktionsgemisch wird dann während 15 Stunden bei Raumtemperatur gerührt. Man gießt diese Lösung auf Eis, wobei das Reaktionsprodukt ausfällt; anschließend wird abfiltriert und mit Wasser neutral gewaschen. Nach der Trocknung erhält man 55 T der Verbindung der Formel

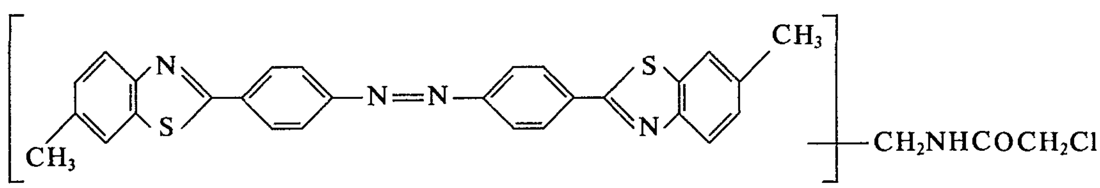

30 T dieser Verbindung werden in 250 T Pyridin 1 Stunde auf 100° erwärmt. Der ausgefallene Farbstoff der Formel

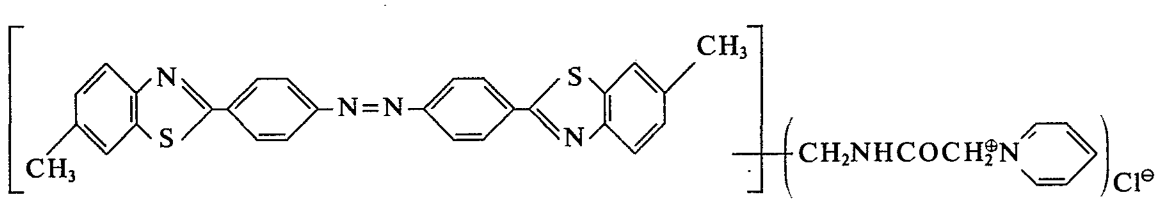

wird durch Filtration isoliert und getrocknet. Er färbt Papier und Baumwolle in hellen gelben Nuancen von sehr guten Echtheiten und zeigt einen ausgezeichneten Aufbau.

Verwendet man statt Pyridin, α-Picolin oder γ-Picolin oder ein Gemisch von beiden, so erhält man ähnliche Farbstoffe mit gleich guten Eigenschaften.

Beispiel 2

In 500 T Monohydrat wird ein Gemisch von 48 T 4,4'-Bis(6-methyl-2-benzthiazol)azobenzol und 40 T N-Methylolchloracetamid bei 0–5° eingetragen und während 15 Stunden bei 50° gerührt. Man fällt das Reaktionsprodukt auf Eis, saugt es nacher ab und wäscht es neutral mit Wasser. Nach der Trocknung erhält man 68 T der Verbindung der Formel

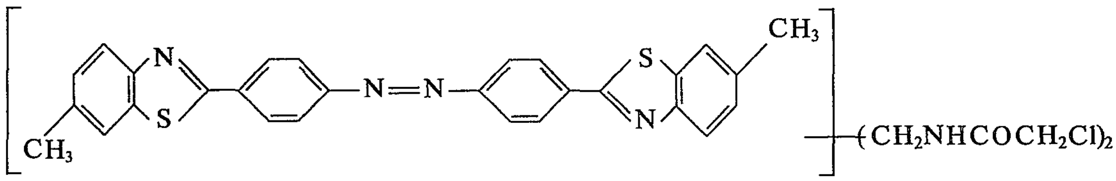

30 T dieser Verbindung werden wie im Beispiel 1 mit 250 T Pyridin umgesetzt. Der erhaltene Farbstoff der Formel

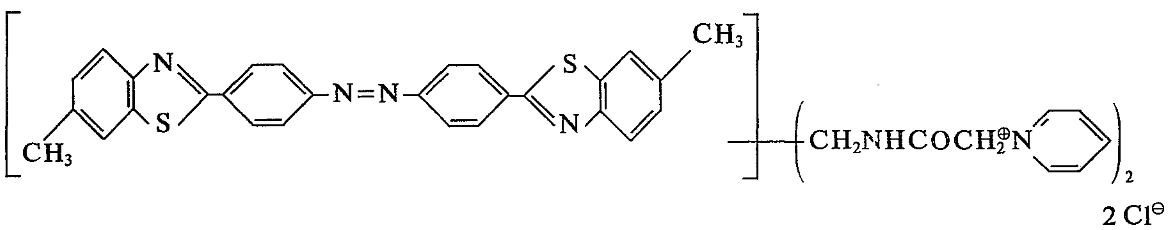

zeigt auf Papier und Baumwolle ein sehr gutes Ausziehvermögen, wobei die hellen gelben Färbungen sehr hohe Naßechtheiten und eine sehr gute Lichtechtheit aufweisen.

Ersetzt man im obigen Beispiel die 250 T Pyridin durch 200 T o-Dichlorbenzol und 15 T Triäthylendiamin, so erhält man bei im übrigen gleicher Arbeitsweise die kationische Verbindung der Formel

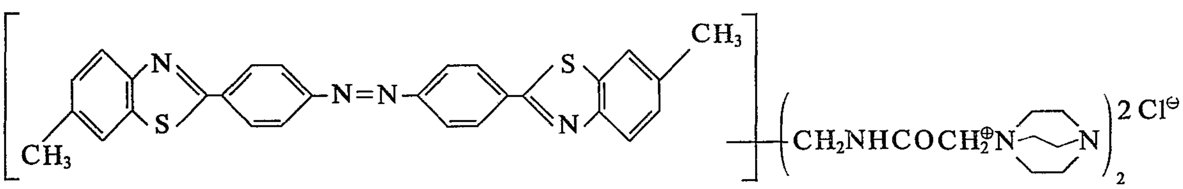

die Papier und Baumwolle in hellen gelben Tönen, mit gutem Ausziehvermögen färbt.

Beispiel 3

25,4 T der Verbindung der Formel

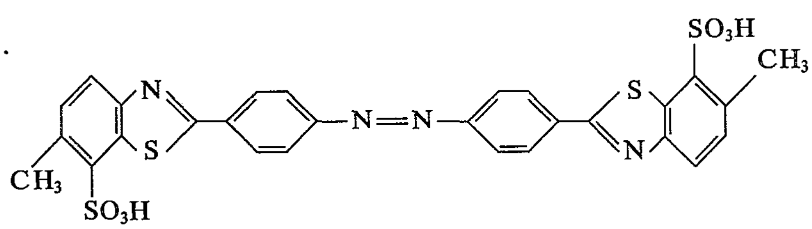

werden in 80 T Chlorsulfonsäure 6 Stunden lang bei 90° gerührt. Dann wird das Reaktionsgemisch auf Eis gegossen, abgenutscht und mit 2%iger NaCl-Lösung schwach sauer gewaschen. Das feuchte Sulfochlorid trägt man bei 0–5° in ein Gemisch von 16,4 T 3-Dimethylamino-1-propylamin, 120 T Eis und 16 T Na-Acetat ein. Das Reaktionsgemisch wird noch 10 Stunden bei 20–25° gerührt und die entstandene Verbindung der Formel

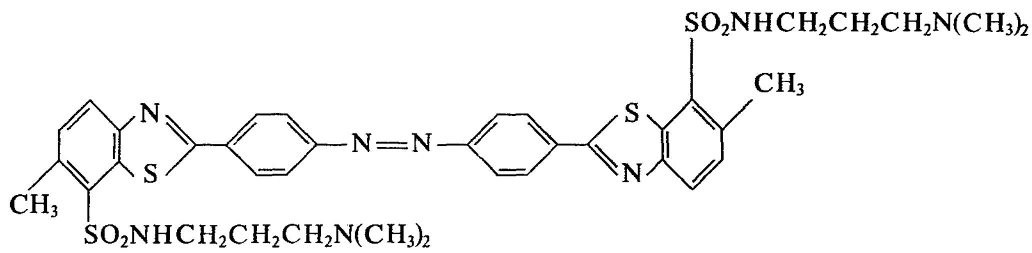

wird durch Filtration isoliert.

Die Quaternierung wird durch kochen mit 100 T Äthylenchlorhydrin bei 120° durchgeführt wobei man den Farbstoff der Formel

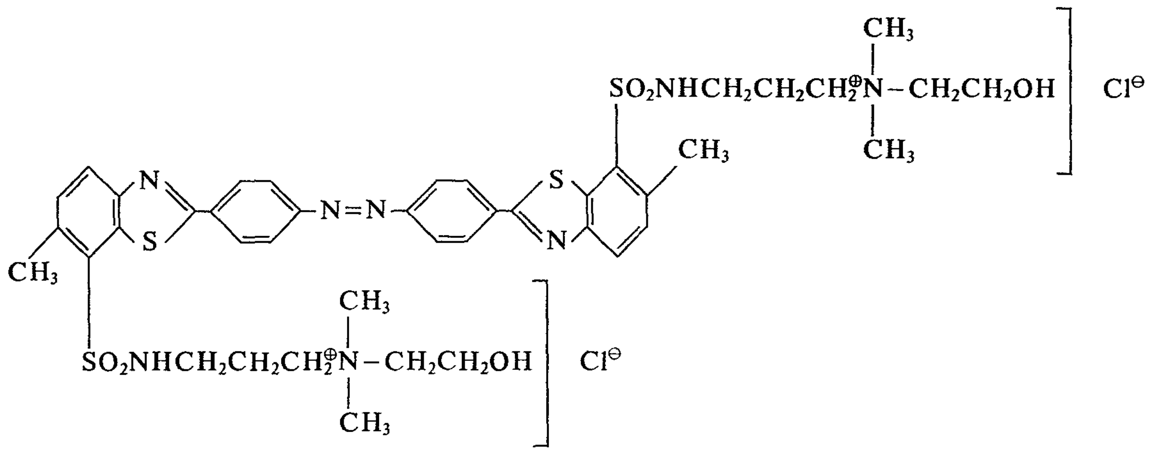

erhält, der auf Papier gefärbt eine helle gelbe Nuance von guter Licht- und Wasserechtheit ergibt.

## Beispiel 4

Man vermischt 50 T chemisch gebleichte Buche Sulfit mit 50 T gebleichtem Sulfit RKN 15 (Mahlgrad 22° SR) und 2 T des Farbstoffes der Formel

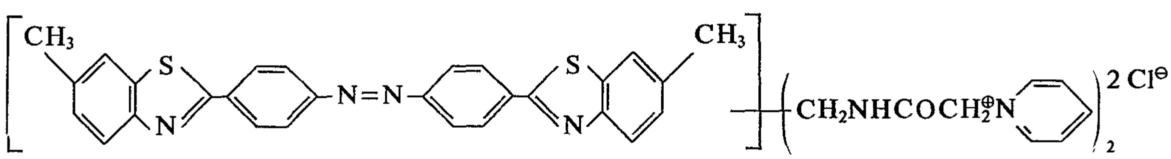

in Wasser (pH 6, Wasserhärte 10 d°H, Temperatur 20°, Flottenverhältnis 1 : 40). Nach 15minütigem Rühren werden Papierblätter auf einem Frank-Blattbildner hergestellt.

Das Papier ist in einer sehr intensiven Gelbnuance gefärbt. Das Abwasser ist völlig farblos. Der Ausziehgrad erreicht 100%.

Die Licht- und Naßechtheiten sind ausgezeichnet. Die nach DIN 53 991/SNV 195 806-Norm bestimmte Wasserechtheit weist z. B. die Note 4 auf. Die nach SNV 196 809 bestimmte Lichtechtheit erreicht die Note 6.

## Beispiel 5

Man arbeitet wie im Beispiel 4, verwendet jedoch 2 Teile des bekannten Farbstoffes der Formel

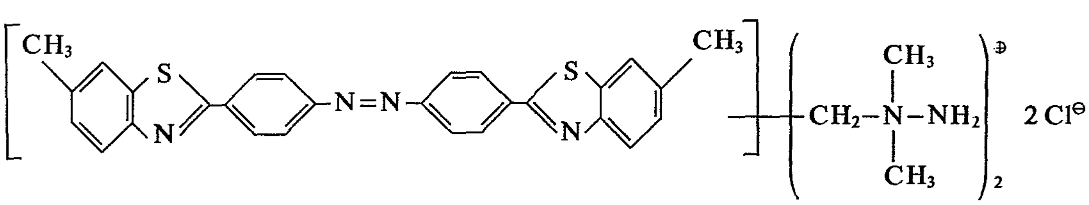

Das Papier wird in der selben intensiven Gelbnuance wie in Beispiel 4 gefärbt. Der Ausziehgrad beträgt jedoch nur ca. 95%. Die Wasserechtheit beträgt nur noch die Note 2.

### Beispiel 6

Man verfährt wie im Beispiel 4, verwendet jedoch 2 Teile des bekannten Farbstoffes der Formel

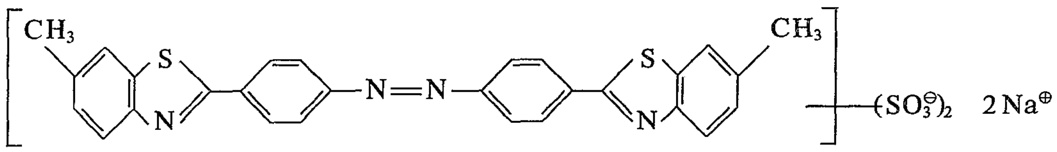

Das Papier wird in einer ähnlichen, etwas helleren Gelbnuance als im Beispiel 4 gefärbt. Der Ausziehgrad erreicht knapp 90%. Das Abwasser ist intensiv gefärbt. Die Wasserechtheit ist unterhalb der Note 2.

### Beispiel 7

Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wäßrige Lösung des Farbstoffes der Formel

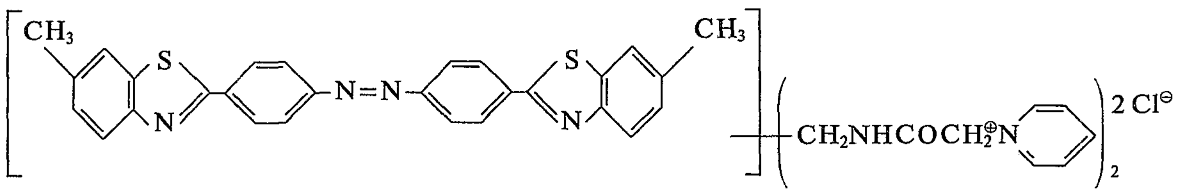

unter starker Turbulenz dem Dünnstoff kontinuierlich zudosiert (0,5%ige Färbung, Flottenverhältnis 1 : 400, Wasserhärte 10° d H, pH 6, Temperatur 20°).

Es entsteht auf der Papierbahn eine egal gefärbte Gelbnuance von mittlerer Intensität, die sehr gut naß- und leichtecht ist. Das Abwasser ist völlig farblos.

### Beispiel 8

10 T Baumwollgewebe (gebleichte mercerisierte Baumwolle) werden in einem Labor-Baumfärbeapparat in 200 T einer Flotte (Wasserhärte 10° d H, pH 4, 3 Umwälzungen der Färbeflotte pro Minute) die 0,05 Teile des Farbstoffes der Formel

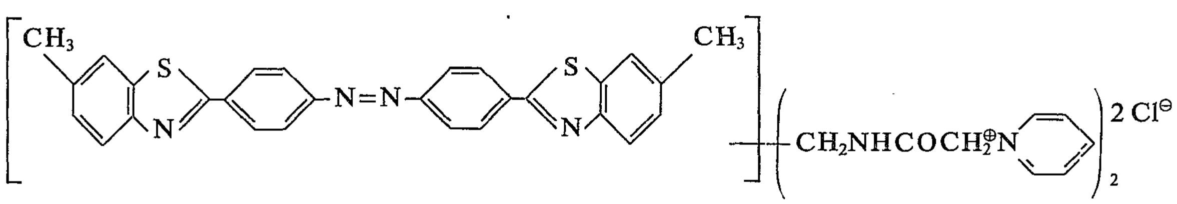

enthält gefärbt. Die Temperatur wird in 60 Minuten von 20° bis 100° aufgeheizt, dann während 15 Minuten konstant gehalten.

Die Färbeflotte ist völlig ausgezogen. Es entsteht auf dem Baumwollgewebe eine intensive Gelbnuance. Die Färbung zeichnet sich durch eine sehr gute Lichtechtheit und eine sehr gute Naßechtheit aus, die derjenigen einer Küpenfärbung gleichkommt.

## Patentansprüche

1. Azoverbindungen der Formel I

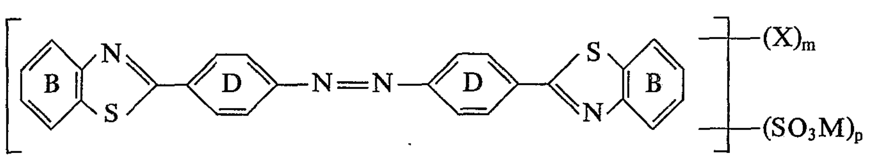

(I)

worin bedeuten:

X ein- oder mehrmals die Reste ($CH_2 \cdot NR \cdot CO(CH_2)_nA$) und/oder ($SO_2NH(CH_2)_nA$),
R Wasserstoff oder eine Alkylgruppe mit 1 bis 4 C-Atomen,
A einen gegebenenfalls quaternisierten basischen Rest,
n die Zahlen 1 bis inclusive 4,
m die Zahlen von 1 bis inclusive 4,
M Wasserstoff oder ein Kation,
p die Zahlen 0 bis inclusive 2, mit der Bedingung, daß m gleich groß oder größer ist als p und worin die Benzolreste B und D ein- oder mehrmals, gleich oder verschieden weitersubstituiert sein können.

2. Azoverbindungen der Formel I gemäß Anspruch 1, dadurch gekennzeichnet, daß X den Rest ($CH_2 \cdot NR \cdot CO(CH_2)_nA$) bedeutet.

3. Azoverbindungen der Formel I gemäß Anspruch 1 und 2, dadurch gekennzeichnet, daß R Wasserstoff bedeutet.

4. Azoverbindungen der Formel I gemäß Anspruch 1, dadurch gekennzeichnet, daß A einen quaternisierten basischen Rest darstellt.

5. Azoverbindungen der Formel I gemäß Anspruch 4, dadurch gekennzeichnet, daß A einen der folgenden quaternisierten basischen Reste darstellt:

a) 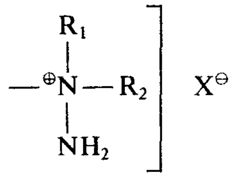

worin $R_1$ und $R_2$ unabhängig voneinander bedeuten: Wasserstoff, einen gegebenenfalls substituierten Alkylrest mit 1 bis 4 Kohlenstoffatomen, eine gegebenenfalls substituierte Cycloalkylgruppe oder einen Arylrest; oder $R_1$ bildet mit $R_2$ unter Einschluß des N-Atoms einen heterocyclischen Ring;

b) 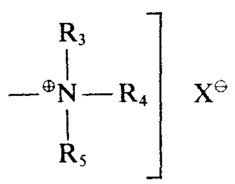

worin bedeuten:
$R_3$ und $R_4$ unabhängig voneinander Wasserstoff, einen gegebenenfalls substituierten Alkylrest mit 1 bis 4 Kohlenstoffatomen, eine gegebenenfalls substituierte Cycloalkylgruppe oder einen Arylrest, und $R_5$ eine Alkylgruppe mit 1 bis 4 Kohlenstoffatomen, oder $R_3$ bildet mit $R_4$ oder $R_3$ bildet mit $R_4$ und $R_5$ zusammen unter Einschluß des N-Atoms einen heterocyclischen Ring;

c) 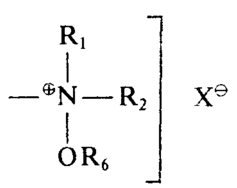

worin $R_1$ und $R_2$ die weiter oben unter a) angegebene Bedeutung haben und $R_6$ einen Alkylrest mit 1 bis 4 C-Atomen darstellt, und worin in allen quaternisierten basischen Resten $X^{\ominus}$ ein Anion bedeutet.

6. Azoverbindungen der Formel I gemäß Anspruch 5, dadurch gekennzeichnet, daß A einen Pyridinring und $X^{\ominus}$ ein Anion darstellen.

7. Azoverbindungen der Formel I gemäß Anspruch 1, dadurch gekennzeichnet, daß n die Zahl 1 bedeutet.

8. Azoverbindungen der Formel I gemäß Anspruch 1, dadurch gekennzeichnet, daß m die Zahl 2 bedeutet.

9. Azoverbindungen der Formel I gemäß Anspruch 1, dadurch gekennzeichnet, daß p die Zahl 0 bedeutet.

10. Azoverbindungen der Formel I gemäß Anspruch 1 und 2, dadurch gekennzeichnet, daß die Benzolreste B ein- oder mehrmals, gleich oder verschieden substituiert sind durch: eine Alkylgruppe mit 1 bis 4 C-Atomen, Halogen, eine gegebenenfalls substituierte Phenylgruppe, eine Alkoxygruppe,

$NO_2$, OH, eine am N-Atom mono- oder disubstituierte $SO_2NH_2$-Gruppe, eine

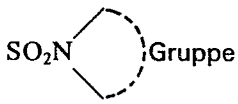

wo das N-Atom gegebenenfalls unter Einbezug eines weiteren Heteroatoms Bestandteil eines heterocyclischen Ringes ist, oder durch einen heterocyclischen Rest.

11. Azoverbindungen der Formel I gemäß Anspruch 1, dadurch gekennzeichnet, daß die Benzolreste B mit einer Alkylgruppe mit 1 bis 2 C-Atomen, substituiert sind.

12. Azoverbindungen der Formel I gemäß Anspruch 1, dadurch gekennzeichnet, daß die Benzolreste D ein- oder mehrmals, gleich oder verschieden substituiert sind durch: Halogen, Alkylgruppen oder Alkoxygruppen mit je 1 bis 4 C-Atomen.

13. Azoverbindungen gemäß Anspruch 1, dadurch gekennzeichnet, daß die Benzolreste D nicht weiter substituiert sind.

14. Azoverbindungen der Formel I gemäß Anspruch 1, dadurch gekennzeichnet, daß:

R Wasserstoff,
A einen quaternisierten basischen Rest, $n=1$, $m=2$, und
p die Zahl 0 bedeuten, und daß der Benzolrest B durch eine Alkylgruppe mit 1 bis 2 C-Atomen substituiert ist und der Benzolrest D nicht weiter substituiert ist.

15. Azoverbindungen gemäß Anspruch 13, dadurch gekennzeichnet, daß A einen Pyridinring und $X^{\ominus}$ ein beliebiges Anion darstellen.

16. Azoverbindung der Formel

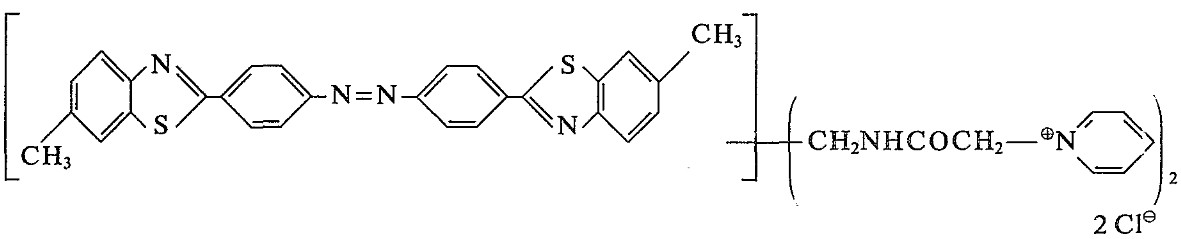

17. Verfahren zur Herstellung von Azoverbindungen der Formel I gemäß Anspruch 1, dadurch gekennzeichnet, daß man

a) in eine Azoverbindung der Formel II

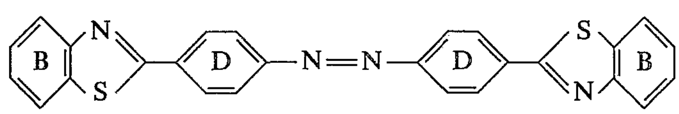

(II)

worin die Symbole B und D die unter Formel I angegebene Bedeutung haben die Gruppe

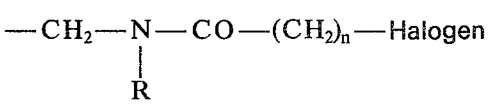

und/oder

$—SO_2NH(CH_2)_n—$Halogen

worin R und n die unter Formel I angegebene Bedeutung haben ein- bis viermal einführt, anschließend das Halogen-Atom durch eine basische oder quaternisierte basische Gruppe A bzw. $A^{\oplus}]X^{\ominus}$ worin $X^{\ominus}$ ein Anion darstellt, ersetzt und gegebenenfalls die basische Gruppe durch Quaternisierung in eine quaternisierte basische Gruppe überführt, und anschließend gegebenenfalls eine $SO_3M$-Gruppe einführt, oder

b) daß man in eine Azoverbindung der Formel II die Gruppe

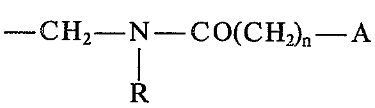

und/oder

$$-SO_2NH(CH_2)_n-A$$

worin A eine basische Gruppe darstellt und R und n die unter Formel I angegebene Bedeutung haben, ein- bis viermal einführt und anschließend gegebenenfalls die basische Gruppe A quaternisiert und sodann gegebenenfalls eine $SO_3M$-Gruppe einführt.

18. Verwendung der Azoverbindungen gemäß Anspruch 1 oder der gemäß dem Verfahren des Anspruches 17 erhaltenen Azoverbindungen als Farbstoffe zum Färben und Bedrucken von Textilmaterialien, Papier, Leder und zur Bereitung von Tinten, sowie zur Massefärbung von linearen synthetischen Superpolyamiden und zur Herstellung von Lacken.

19. Verwendung der Azoverbindungen gemäß Anspruch 18 als Farbstoffe zum Färben und Bedrucken von natürlichen und regenerierten Cellulosematerialien, vor allem Baumwolle, und Viscose ohne Salzzugabe.

20. Verwendung der Azoverbindungen gemäß Anspruch 18 zum Färben und Bedrucken von Papier.

21. Verwendung der Azoverbindungen gemäß Anspruch 18 zum Färben und Bedrucken von ligninfreiem, gebleichtem Papier.

22. Verwendung der Azoverbindungen gemäß Anspruch 18 als Farbstoffe zum Färben und Bedrucken von natürlichen Polyamidmaterialien wie Wolle und Seide oder von basisch färbbaren, modifiziertem Polyamid.

23. Verwendung der Azoverbindungen gemäß Anspruch 18 zum Färben und Bedrucken von Polyacrylnitrilmaterialien.

24. Verwendung der Azoverbindungen gemäß Anspruch 18 als Farbstoffe zum Färben und Bedrucken von basisch färbbaren, modifizierten Polyestermaterialien.

25. Die gemäß Anspruch 18 behandelten bzw. gefärbten und bedruckten Materialien.

**Claims**

1. An azo compound of the formula I

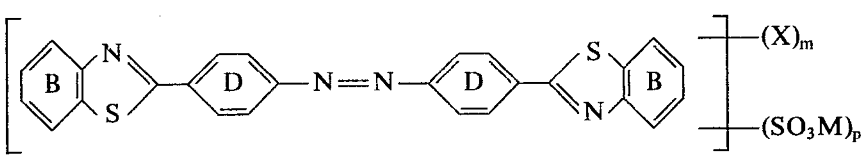

(I)

wherein X is one or more of the radicals $(CH_2 \cdot NR \cdot CO(CH_2)_nA)$ and/or $(SO_2NH(CH_2)_nA)$, R is hydrogen or an alkyl group of 1 to 4 carbon atoms, A is a non-quaternised or quaternised basic radical, n is 1 to 4, m is 1 to 4, M is hydrogen or a cation, p is 0 to 2, with the proviso that the value of m is as great or greater than p, and wherein the benzene nuclei B and D may additionally contain one or more identical or different substituents.

2. An azo compound of the formula I according to claim 1, wherein X is the radical $(CH_2 \cdot NR \cdot CO(CH_2)_nA)$.

3. An azo compound of the formula I according to claims 1 and 2, wherein R is hydrogen.

4. An azo compound of the formula I according to claim 1, wherein A is a quaternised basic radical.

5. An azo compound of the formula I according to claim 4, wherein A is one of the following quaternised basic radicals:

a) 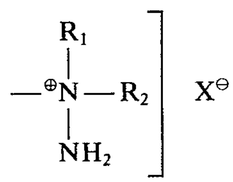

wherein each of $R_1$ and $R_2$ independently is hydrogen, an unsubstituted or substituted alkyl radical of 1 to 4 carbon atoms, an unsubstituted or substituted cycloalkyl group, or an aryl radical; or $R_1$ and $R_2$ together with the nitrogen atom to which they are attached form a heterocyclic ring;

b) 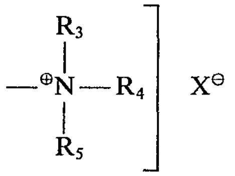

wherein each of $R_3$ and $R_4$ independently is hydrogen, an unsubstituted or substituted alkyl radical of 1 to 4 carbon atoms, an unsubstituted or substituted cycloalkyl group, or an aryl group, and $R_5$ is an alkyl group of 1 to 4 carbon atoms, or $R_3$ and $R_4$ or $R_3$, $R_4$ and $R_5$ together with the nitrogen atom to which they are attached form a heterocyclic ring;

c) 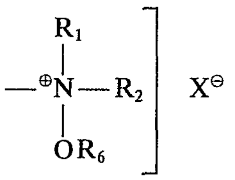

wherein $R_1$ and $R_2$ are as defined above under a) and $R_6$ is an alkyl radical of 1 to 4 carbon atoms, and wherein in all quaternised basic radicals, $X^{\ominus}$ is an anion.

6. An azo compound of the formula I according to claim 5, wherein A ist a pyridine ring and $X^{\ominus}$ is an anion.

7. An azo compound of the formula I according to claim 1, wherein n is 1

8. An azo compound of the formula I according to claim 1, wherein m is 2.

9. An azo compound of the formula I according to claim 1, wherein p is 0.

10. An azo compound of the formula I according to claims 1 and 2, wherein the benzene nuclei B contain one or more identical or different substituents, selected from an alkyl group of 1 to 4 carbon atoms, halogen, an unsubstituted or substituted phenyl group, an alkoxy group, $NO_2$, OH, a $SO_2NH_2$ group which is mono- or disubstituted at the nitrogen atom, a

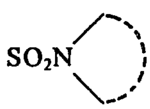 group

in which the nitrogen atom, optionally together with a further heteroatom, is part of a heterocyclic ring; or a heterocyclic radical.

11. An azo compound of the formula I according to calim 1, wherein the benzene nuclei B are substituted by an alkyl group containing 1 to 2 carbon atoms.

12. An azo compound of the formula I according to claim 1, wherein the benzene nuclei D contain one or more identical or different substituents, namely halogen, alkyl groups or alkoxy groups, each containing 1 to 4 carbon atoms.

13. An azo compound according to claim 1, wherein the benzene nuclei D do not contain further substituents.

14. An azo compound of the formula I according to claim 1, wherein R is hydrogen, A is a quaternised basic radical, n ist 1, m is 2 and p is 0, and wherein the benzene nucleus B is substituted by an alkyl group containing 1 to 2 carbon atoms and the benzene nucleus D is not further substituted.

15. An azo compound according to claim 13, wherein A is a pyridine ring and $X^{\ominus}$ is an anion.

16. An azo compound of the formula

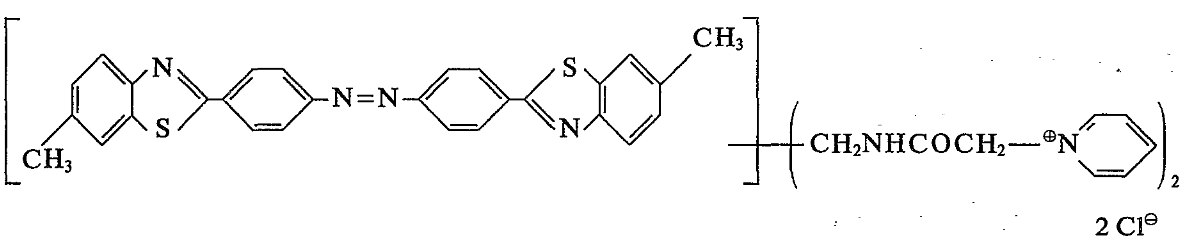

17. A process for the production of an azo compound of the formula I according to claim 1, which process comprises

a) introducing the group

$$-CH_2-\underset{\displaystyle R}{\underset{|}{N}}-CO-(CH_2)_n-\text{halogen}$$

and/or

$$-SO_2NH(CH_2)_n-\text{halogen}$$

wherein R and n are defined for formula I, 1 to 4 times into an azo compound of the formula II

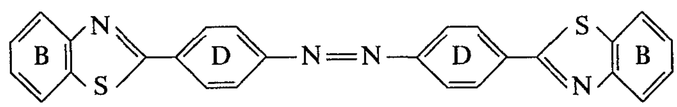

(II)

wherein B and D are as defined for formula I, then replacing the halogen atom by a basic group A or by a quaternised basic group $A^{\oplus}]\ X^{\ominus}$, wherein $X^{\ominus}$ is an anion, and, if desired, converting the basic group A by quaternisation into a quaternised basic group, and if desired, subsequently introducing a $SO_3M$ group; or

b) introducing the group

$$-CH_2-\underset{\displaystyle R}{\underset{|}{N}}-CO-(CH_2)_n-A$$

and/or

$$-SO_2NH(CH_2)_n\text{-}A$$

wherein A is a basic group and R and n are as defined for formula I, 1 to 4 times into an azo compound of the formula II, and, if desired, subsequently quaternising the basic group A and then, if desired, introducing a $SO_3-M$ group.

18. Use of an azo compound according to claim 1, or of the azo compound obtained by the process claimed in claim 17, as a dye for colouring and printing textiles, paper and leather and for the preparation of inks, as well as for the mass colouration of synthetic linear polyamides and for the production of lacquers.

19. Use of the azo compounds according to claim 18 as dyes for colouring and printing natural and regenerated cellulosic fabrics, especially cotton, and viscose, without the addition of salt.

20. Use of the azo compounds according to claim 18 for colouring and printing paper of all kinds.

21. Use of the azo compounds according to claim 18 for colouring and printing lignin-free, bleached paper.

22. Use of the azo compounds according to claim 18 as dyes for colouring and printing natural polyamide material such as wool or silk, or modified polyamide which can be dyed by basic dyes.

23. Use of the azo compounds according to claim 18 for colouring and printing acrylic fabrics.

24. Use of the azo compounds according to claim 18 as dyes for colouring and printing modified polyester material which can be dyed by basic dyes.

25. The material which is dyed or printed according to claim 18.

**Revendications**

1. Composés azoïques de formule I

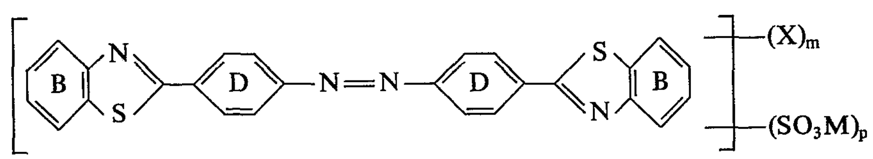

(I)

X représente une fois ou plusieurs fois les restes $(CH_2 \cdot NR \cdot CO(CH_2)_nA)$ et/ou $(SO_2NH(CH_2)_nA)$,
R est de l'hydrogène ou un groupe alkyle avec 1 à 4 atomes de carbone,
A est un reste basique éventuellement quaternisé,
n représente les nombres 1 à 4 inclus,

m représente les nombres de 1 à 4 inclus,
M est de l'hydrogène ou un cation,
p représente les nombres 0 à 2 inclus à la condition que m soit égal ou supérieur à b, et formule dans laquelle les restes benzéniques B et D peuvent être une fois ou plusieurs fois encore substitués d'une façon identique ou différente.

2. Composés azoïques de formule I selon la revendication 1, caractérisés par le fait que X désigne le reste $CH_2 \cdot NR \cdot CO(CH_2)_nA$).

3. Composés azoïques de formule I selon les revendications 1 et 2, caractérisés par le fait que R désigne l'hydrogène.

4. Composés azoïques de formule I selon la revendication 1, caractérisés par le fait que A représente un reste basique quaternisé.

5. Composés azoïques de formule I selon la revendication 4, caractérisés par le fait que A représente un des restes basiques quaternisés suivants

a) 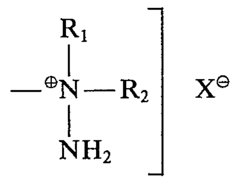

où $R_1$ et $R_2$, indépendamment l'un de l'autre, désignent de l'hydrogène, un reste alkyle avec 1 à 4 atomes de carbone éventuellement substitué, un groupe cycloalkyle éventuellement substitué ou un reste aryle; ou bien $R_1$ forme avec $R_2$ en incluant l'atome N un noyau hétérocyclique;

b) 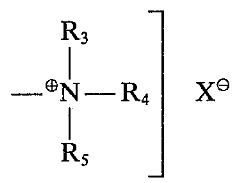

où $R_3$ et $R_4$ désignent, indépendamment l'un de l'autre, de l'hydrogène un reste alkyle avec 1 à 4 atomes de carbone éventuellement substitué, un groupe cycloalkyle éventuellement substitué ou bien un reste aryle, et $R_5$ est un groupe alkyle avec 1 à 4 atomes de carbone, ou bien $R_3$ forme avec $R_4$, ou $R_3$ forme avec $R_4$ et $R_5$, en incluant l'atome N, un noyau hétérocyclique;

c) 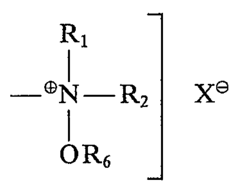

où $R_1$ et $R_2$ ont les significations données plus haut sous a), et $R_6$ est un reste alkyle avec 1 à 4 atomes de carbone, et où dans les restes basiques quaternisés, $X^{\ominus}$ désigne un anion.

6. Composés azoïques de formule I selon la revendication 5, caractérisés par le fait que A représente un noyau pyridique et $X^{\ominus}$ représente un anion.

7. Composés azoïques de formule I selon la revendication 1, caractérisés par le fait que n désigne le nombre 1.

8. Composés azoïques de formule I selon la revendication 1, caractérisés par le fait que m désigne le nombre 2.

9. Composés azoïques de formule I selon la revendication 1, caractérisés par le fait que p désigne le nombre 0.

10. Composés azoïques de formule I selon les revendications 1 et 2, caractérisés par le fait que les restes benzéniques B sont substitués une fois ou plusieurs fois, d'une façon identique ou différente, par un groupe alkyle avec 1 à 4 atomes de carbone, halogéno, un groupe phényle éventuellement substitué, un groupe alcoxy, $NO_2$, OH, un groupe $SO_2NH_2$ mono-substitué ou disubstitué sur l'atome N, un groupe

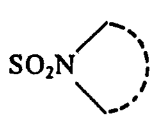

où l'atome N éventuellement en incorporant un autre hétéroatome est un élément constitutif d'un noyau hétérocyclique, ou bien par un reste hétérocylique.

11. Composés azoïques de formule I selon la revendication 1, caractérisés par le fait que les restes benzéniques B sont substitués avec un groupe alkyle ayant 1 ou 2 atomes de carbone.

12. Composés azoïques de formule I selon la revendication 1, caractérisés par le fait que les restes benzéniques D sont substitués une fois ou plusieurs fois, d'une façon identique ou différente par de l'halogène, des groupes alkyle ou des groupes alcoxy ayant chacun 1 à 4 atomes de carbone.

13. Composés azoïques selon la revendication 1, caractérisés par le fait que les restes benzéniques D ne portent pas d'autres substituants.

14. Composés azoïques de formule I selon la revendication 1, caractérisés par le fait que:

R est de l'hydrogène
A est un reste basique quaternisé, $n = 1$, $m = 2$, et
p désigne le nombre 0, et que le reste benzénique B est substitué par un groupe alkyle ayant 1 ou 2 atomes de carbone et que le reste benzénique D ne porte pas d'autres substituants.

15. Composés azoïques selon la revendication 13, caractérisés par le fait que A est un noyau pyridique et $X^{\ominus}$ représente un anion quelconque.

16. Composé azoïque de formule

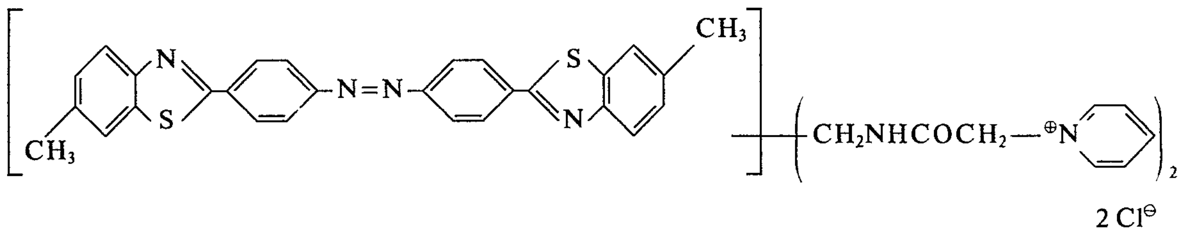

17. Procédé pour la préparation de composés azoïques de formule I selon la revendication 1 caractérisé par le fait que

a) on introduit dans un composé azoïque de formule II

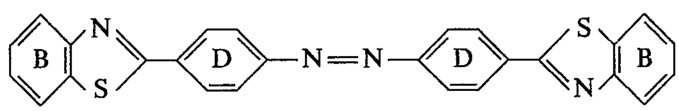

(II)

dans laquelle les symboles B et D ont les significations données sous la formule I, une fois à quatre fois les groupes

$$-CH_2-\underset{\displaystyle R}{\underset{|}{N}}-CO-(CH_2)_n-\text{halogène}$$

et/ou

$$-SO_2NH(CH_2)_n-\text{halogène}$$

dans lesquels R et n ont les significations données sous la formule I, puis on remplace l'atome d'halogène par un groupe basique A ou bien un groupe basique quaternisé $A^{\oplus}]$ $X^{\ominus}$ où $X^{\ominus}$ représente anion, et on transforme éventuellement le groupe basique en un groupe basique quaternisé par quaternisation, puis on introduit éventuellement un groupe $SO_3M$, ou bien

b) on introduit dans un composé azoïque de formule II, une fois à quatre fois les groupes

$$-CH_2-\underset{\displaystyle R}{\underset{|}{N}}-CO(CH_2)_n-A$$

et/ou

$$-SO_2NH(CH_2)_n-A$$

dans lesquels A représente un groupe basique, et R et n ont les significations données sous la

formule I, puis on quaternise éventuellement le groupe basique A, puis on introduit éventuellement un groupe $SO_3M$.

18. Utilisation des composés azoïques selon la revendication 1, ou des composés azoïques obtenus selon le procédé de la revendication 17, comme colorants pour la teinture et l'impression des matières textiles, du papier, du cuir et pour la préparation d'encres, ainsi que pour la teinture en masse de superpolyamides synthétiques linéaires et pour la fabrication de laques.

19. Utilisation des composés azoïques selon la revendication 18, comme colorants pour la teinture et l'impression de matières cellulosiques naturelles et regénérées, surtout du coton et de la »Viscose« sans addition de sels.

20. Utilisation des composés azoïques selon la revendication 18, pour la teinture et l'impression du papier.

21. Utilisation des composés azoïques selon la revendication 18, pour la teinture et l'impression du papier blanchi sans lignine.

22. Utilisation des composés azoïques selon la revendication 18, comme colorants pour la teinture et l'impression des matières en polyamides naturelles telles que la laine et la soie, ou de polyamide modifié pouvant être teint d'une façon basique.

23. Utilisation des composés azoïques selon la revendication 18, pour la teinture et l'impression des matières en polyacrylonitrile.

24. Utilisation des composés azoïques selon la revendication 18, comme colorant pour la teinture et l'impression des matières en polyester modifiées pouvant être teintes d'une façon basique.

25. Les matières traitées ou teintes et imprimées selon la revendication 18.